(19) Europäisches Patentamt

European Patent Office

Office européen des brevets

(11) EP 0 749 565 B1

(12) **EUROPEAN PATENT SPECIFICATION**

(45) Date of publication and mention
of the grant of the patent:
**19.06.2002 Bulletin 2002/25**

(51) Int Cl.⁷: $G01G\ 19/12$, G06F 15/18

(86) International application number:
**PCT/FI95/00133**

(21) Application number: **95911349.9**

(22) Date of filing: **10.03.1995**

(87) International publication number:
**WO 95/24616 (14.09.1995 Gazette 1995/39)**

(54) **METHOD FOR MEASURING LOADS BEING DIRECTED TO STRUCTURES**

VERFAHREN ZUR MESSUNG VON AUF EINE STRUKTUR WIRKENDEN LASTEN

METHODE DE MESURE DE CHARGES IMPARTIES A DES STRUCTURES

(84) Designated Contracting States:
**BE DE FR GB IT SE**

(30) Priority: **10.03.1994 FI 941153**

(43) Date of publication of application:
**27.12.1996 Bulletin 1996/52**

(73) Proprietor: **Koivisto, Marja-Liisa**
**53950 Lappeenranta (FI)**

(72) Inventors:
• **KOIVISTO, Vesa**
**FIN-53950 Lappeenranta (FI)**

• **SUNDQVIST, Jari**
**FIN-53300 Lappeenranta (FI)**

(74) Representative: **Helino, Timo Kalervo**
**Papula Oy,**
**P.O. Box 981**
**(Fredrikinkatu 61 A)**
**00101 Helsinki (FI)**

(56) References cited:
**EP-A- 0 545 641        WO-A-91/19172**
**WO-A-94/23275        US-A- 4 979 124**
**US-A- 5 285 523**

**EP 0 749 565 B1**

**Description**

The invention relates to a method according to the introductory part of patent claim 1 for measuring loads and/or load distributions of structures.

Structures here mean stationary structures such as buildings, bridges, rails (railroads), quays, stationary load beds or the like, and moving structures, such as vehicles, hoisting gear and the like. Vehicle here means a bed or space to be moved on wheels, runners or similar structures, on which bed or space for instance goods and/or people can be transported, and which can be moved by its own power source or hauled, separately or in a combination, by a suitable hauling apparatus. The vehicle can be a car, for instance a truck, a railway vehicle, such as a engine or a railway car; a sleigh; a vehicle provided with one or several track chains, or even an airplane (being moved on wheels on the airfield), just to mention some examples.

In the prior art there is known, from the international patent application WO-A-91 19172 a method and apparatus for weighing a load. In this method, a load bed, such as a vehicle or a container, supported for instance by legs or wheels, is provided with detectors, advantageously strain gauge detectors, and the load weight is defined on the basis of the signals obtained from these detectors. The said detectors are installed in the solid frame of the load bed, in the vicinity of the fastening points of the supports; they are used for measuring deformations and/or strain caused in the frame by the load, and the load weight is defined on the basis of these measurements.

A drawback with the above described method and apparatus is that the installation of the detectors at the points of measurement in the vicinity of the fastening points of support is mainly carried out experimentally, and hence it may be difficult to find the most suitable points of measurement in various load bed constructions.

In the prior art there is known, from the international patent application WO-A-94 23275 a method for weighing a load, introducing an efficient method for defining the points of measurement so that the detectors can be attached directly to advantageous measuring spots in connection with the load bed and thereafter calibrated, so that an essentially correct result, i.e. weight of the load, is obtained.

Thereby the drawbacks of the previously mentioned patent application can be avoided.

However, the problem with the latter method is that the points of measurement in the load bed are defined by a mathematical process which requires modeling of the load bed. This delays the application of the method, particularly in structures which have not been modeled before. Another drawback is the fact that the calibration of the detectors attached to the points of measurement is carried out straightforwardly by defining the correction factors on the basis of the loads of other points of support affecting each point. This arrangement becomes problematic, particularly when the number of the points of measurement grows and the measured load bed or other structure becomes complicated.

In the prior art EP 0545641 discloses a system for determing the pressure of a pneumatic tire and/or vehicle velocity. A linear array of load sensors installed in a driveway is used to determine the distribution of contact forces along the width of a pneumatic tire. A neural network is employed to classify the pattern of force sensed in this manner. However, this kind of system cannot be used to measure loads and/or load distribution of structures.

The object of the invention is to eliminate at least part of the above mentioned drawbacks and to simplify the method of measurement. A particular object of the invention is to introduce a new and efficient method for defining the load in various structures, so that the numbers of points of measurement and/or complexities of construction in the structure do not cause insurmountable difficulties when measuring the loads directed thereto.

The method of the invention for measuring loads and/or load distributions of structures is characterized by the features stated in the characterising portion of the patent claim 1.

In the method of the invention for measuring loads and/or load distributions of structures having bearing structures such as frame parts, wherein detectors, advantageously strain gauge detectors, measuring the deformations of the structures are attached to the bearing structures, particularly to the frame parts, in the vicinity of the support points. According to the invention the measurement signals obtained from the measuring detectors are processed by means of a predetermined neural network, so that they are fed to the neural network through the input layer thereof, and from the output layer of the neural network, there are obtained the loads directed to the desired points of the structure, particularly to one or several support points, and that the neural network is in advance trained with test loads to process the measurement signals of the said detectors.

In an advantageous method of the invention

a) at the support points of the structures, there are arranged predetermined loads of known magnitudes;
b) the measurement signal obtained from the measuring detectors are preprocessed and considered as input signals from the input units of the input layer of a predetermined neural network;
c) all measurement signals are processed in the neural network by using preliminary weights in between units of the different layers of the neural network, so that the computational load values directed to the said support points of the structures are defined as the output signals of the output units of the output layer;

2

d) the values of known loads directed to the support points of the structures are compared with the computational load values, and on the basis of the difference of these values, there are defined new weights which replace the preliminary weights;

e) all measurement signals are reprocessed in the neural network by using the new weights in between the different units of the layers of the neural network, so that the computational load values directed to the said support points of the structures are defined as output signals of the output units of the output layer of the neural network;

f) the values of known loads directed to the support points of the structures are compared with the new computational load values, and if the difference surpasses the preset limits, on the basis of the differences of these values there are again defined new weights, and the above described calculation procedure is repeated, and if the difference now remains within the allowed limits, the weights are retained;

g) the predetermined loads arranged at the support points of the structures are removed; and

h) on the basis of the measurement signals obtained from the detectors connected to the support points, the load directed to one or several support points is defined by utilizing the neural network and the predetermined weights.

An advantage of the method of the invention is that it can be applied to many types of structures. These structures can be stationary, such as buildings, bridges, load beds and loading ramps, or movable, such as vehicles, trucks, hoisting gear or the like. The measuring system of the invention is particularly suited to observing variation in loads and to controlling and/or defining the distribution of loads in the different parts of the structures. The method can be used for detecting load peaks and for alarming when a preset load limit is surpassed, as a total load value and/or with respect to chosen structures. Yet another advantage of the invention is that the number of measuring points and/or desired measurement signals does not have to be limited. By applying the method of the invention, there can be processed a large number of measurement signals, on the condition that the measuring system is provided with a sufficient data processing capacity, particularly calculatory capacity.

The most advantageous application of the invention relates to a method for measuring the load and/or load distribution of a vehicle. In this method, the detectors measuring the deformation of structures, particularly strain gauge detectors, are attached to the load-bearing parts of the vehicle, particularly to the frame parts, most advantageously in the vicinity of the support points. According to the invention, the measurement signals obtained from the measuring detectors are processed by means of a predetermined neural network, so that from the output layer of the neural network there are obtained weight loads directed to desired spots of the vehicles, particularly to one or several points of support, and that the neural network is in advance trained with test loads to process the measurement signals from the said detectors.

It is an advantage of the weight measurement system of the invention that the measuring detectors can be attached to the frame beams of the vehicle, particularly a truck and/or a trailer, in the vicinity of the points of suspension or points of support of the wheels, to which support points the reaction forces are directed. As for the definition of the load values, the locations of the measuring points/detectors do not have to be set at the theoretically exact optimum points, but it suffices that the gauges are located in the correct area. The correct area is dependent on the structure, and it is generally the area surrounding the support points of the structure; in the case of a truck, for instance, it is the area surrounding the wheels and/or wheel bogies. Another advantage is that the number of the detectors does not have to be limited; around the fastening/support points, there can be arranged several strain gauge detectors or the like. Yet another advantage of the invention is that the measuring system applying the method is calibrated in connection with the installation of the system, whereafter it is in a fully operable order. If necessary, check calibrations can still be carried out. Yet another advantage of the system is that by programmatic means, it is possible to define the distribution of weight with respect to wheels/wheel bogies particularly in trucks or the like and to control overweight, uneven distribution of the load, shifting of the load etc.

The invention is explained below with reference to the appended drawings, where

Figure 1    is a schematic illustration of the beam structure;

Figure 2    illustrates one junction A of the beams in the beam structure of Figure 1 as well as connected measuring detectors and the processing system of the measurement signals in block diagram form;

Figure 3    illustrates a three-layered neural network for calculating the loads;

Figure 4    illustrates a processing unit, i.e. a neuron, of the neural network;

Figures    5 and 6 illustrate in flowchart form the training process of the neural network, the said neural network being suited to the load measuring system;

Figure 7    illustrates in flowchart form the measuring of the load carried out by means of the neural network;

Figure 8    is a schematic top-view illustration of a vehicle combination where in the frame of the tractor and the trailer, there are arranged detectors in order to measure the weight and/or weight distribution, and the obtained measurement signals are processed by a suitable data processing unit according to the method of the invention;

Figure 9     is a top-view illustration of a detail of the vehicle combination of Figure 8, i.e the fastening of the wheel to the frame structure of the vehicle and the installation of the measuring detectors in connection with the frame part;

Figure 10    is a side-view illustration of a detail of the vehicle combination of Figure 8 (cf. Figure 9); and

Figure 11    illustrates how the measuring method of the invention is applied to the weight measuring system of the vehicle of Figure 8.

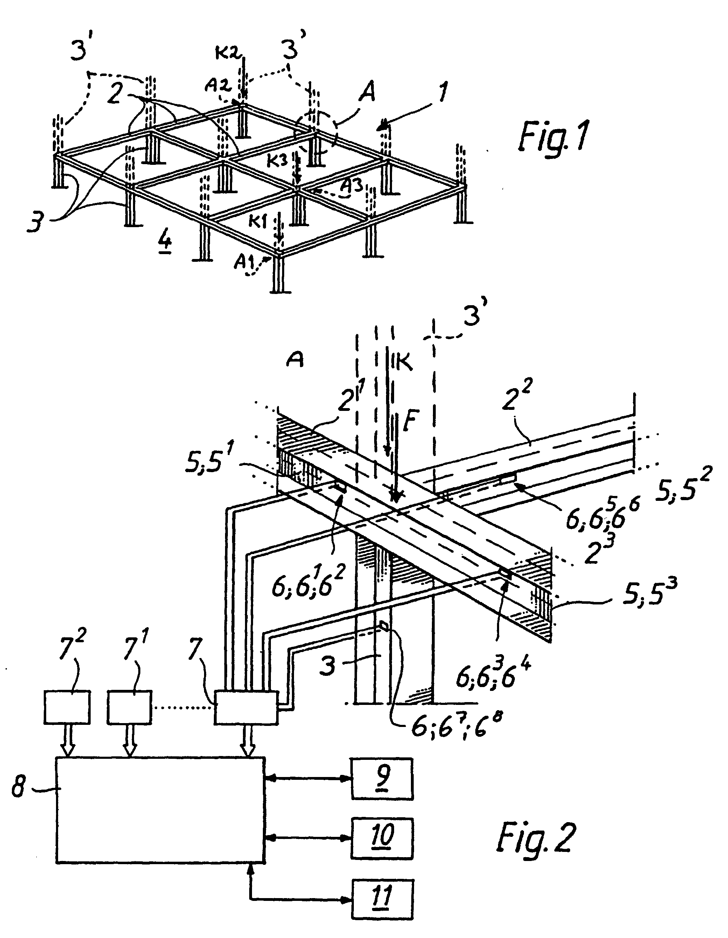

Figure 1 illustrates a lattice-like steel beam structure 1, which forms for instance the frame of a building or part of the frame. The horizontal beams 2 of the steel beam structure 1 form one floor level or the like. The horizontal beams 2 are supported against the foundation 4 and/or to the preceding floor level by vertical beams 3, 3'. The junction A of the horizontal and vertical beams 2, 3, 3' is illustrated in Figure 2. The junctions of the horizontal and vertical beams 2, 3, 3', such as the junction A, constitute the locations or support points, through which the weight load, among others, is directed to the various parts of the structure and is shifted in the structures.

In Figure 2, the horizontal beams $2; 2^1, 2^2, 2^3$ are suitably interconnected at the vertical beams 3, 3'. In this case the beams 2, 3, 3' are I-beams. In the vicinity of the vertical beam 3, 3', in connection with the horizontal beams $2; 2^1, 2^2, 2^3$, in the vertical web parts $5; 5^1, 5^2, 5^3$ thereof, there are attached the measuring detectors $6; 6^1, 6^2, 6^3, 6^4, 6^5$ and $6^6$.

The measuring detectors 6 are advantageously realized of two or more strain gauge elements arranged crosswise or at an angle with respect to each other. They are attached, for instance glued, onto the opposite sides of the web parts 5, on both sides of the beam 2, symmetrically at a suitable, advantageously calculated distance from the junction and support point A formed by the horizontal 2 and vertical 3, 3' beams. The locations of the points of measurement are defined for example by means of the known FEM (Finite Element Method), and the measuring detectors 6 are installed in an area which is suitable with respect to the theoretically calculated optimal point of measurement. The points of measurement are placed in the vicinity of the support points especially because on the basis of the difference of the shearing strengths affective on the different sides of the support points, it is possible to determine the support reactions, such as weight loads directed to the support points. By means of the detectors 6, there are measured deformations, such as bending and/or strain and compression in structures, in this case in the horizontal beams 2.

In connection with the vertical beams 3, 3' of the steel beam structure 1 of Figure 1, in this embodiment in the web parts $5; 5^4$, there can also be provided measuring detectors $6; 6^7, 6^8$. In addition to the above described detectors $6; 6^1, 6^2, 6^3, 6^4, 6^5, 6^6$, they can also be installed at each desired junction A; A1, A2, A3,... or alternatingly with respect to these. In the latter case, at the junction there is measured the compression directed to this support point, i.e. only vertical forces F, whereas in the former and more general case, all strains directed to the structures can be measured.

The measuring detectors $6, 6^1, 6^2, 6^3, ..., 6^N$ (N = 1, 2, 3, ...) are connected to the preprocessing unit $7; 7^1, 7^2, 7^3,...$of each support point. In the preprocessing unit 7, the measurement signal obtained from the measuring detectors 6 is processed, for instance amplified and stabilized, in order to be suitable for the input interfaces of the successive processing units. From the preprocessing unit 7, the measurement signals are fed to the neural network unit 8 for the processing proper of the measurement signals. To the neural network unit 8, there are connected one or several memory units 9, a display unit 10 and keyboard 11. To the neural network unit 8 there are also connected the measurement signals obtained through the preprocessing units $7; 7^1, 7^2, ...$from other measuring detectors 6 arranged at the respective support points in the structure 1. The neural network unit 8 advantageously constitutes a data processing unit including one or several microprocessors.

The measurement signals are processed in the neural network unit 8 by means of a recorded neural network program, so that from the output layer of the neural network there are obtained as results the loads directed to desired points in the structure 1, for instance to one or several support points A; A1, A2, A3, .... The neural network unit 8, i. e. the neural network, can be considered to be composed of separate but interconnected calculatory or processing units. The neural network is trained in advance with test loads to process the measurement signals of the said measuring detectors.

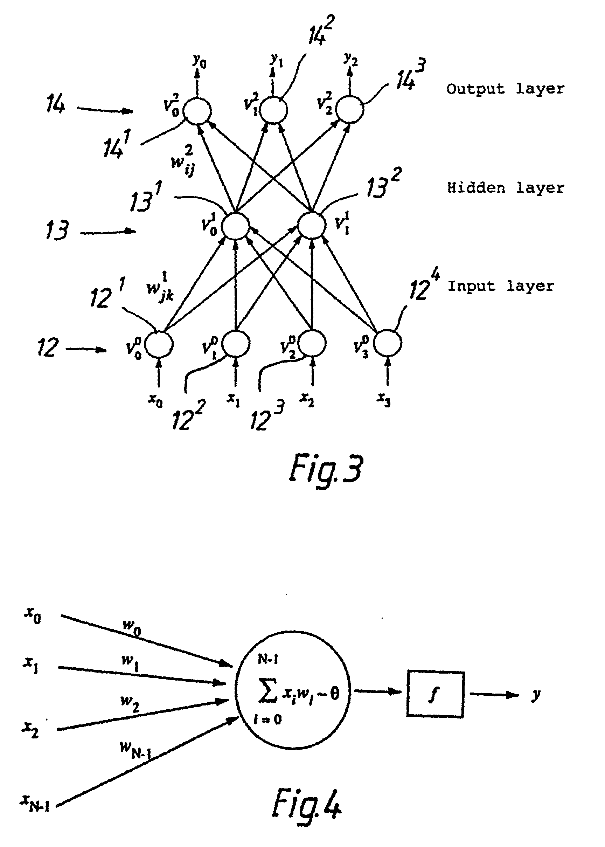

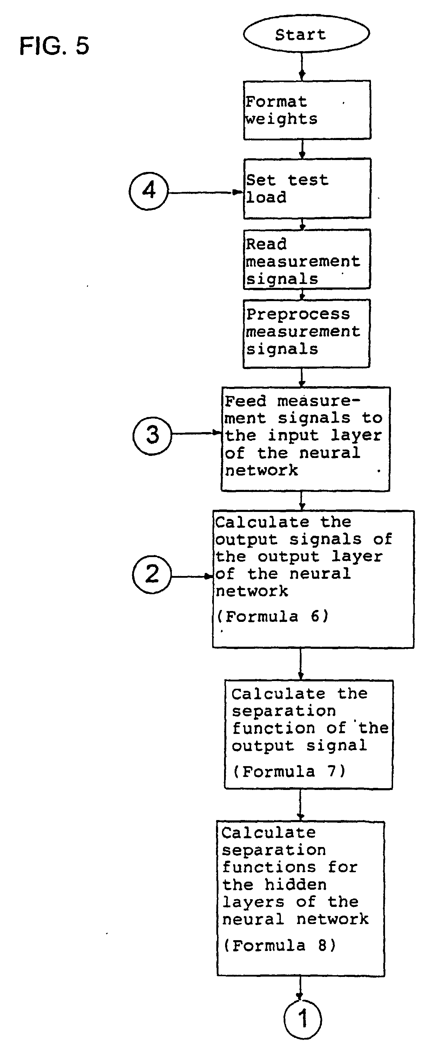

Figure 3 illustrates a three-layered neural network, which is a so-called perceptron network. Figure 4 illustrates a processing unit, i.e. neuron, of this type of neural network. The employed neural network is a network of three or more layers, comprising an input layer 12, one or several hidden layers 13 and an output layer 14. Let us now suppose that the analogous measurement signals $x; x_0, x_1, x_2, x_3$ obtained from the measuring detectors 6 are processed in the preprocessing unit 7, where they are normalized to the area [0, 1] and digitized. The thus formed normalized input signals are fed to the neural network unit 8. Now the normalized input signals are fed into the input units $12^1, 12^2, 12^3, 12^4$ of the input layer of the neural network. The output signals $V_0{}^0, V_1{}^0, V_2{}^0$ obtained from these input units are formed by multiplying the normalized input signals by the first weights $w_{jk}{}^1$, and the obtained products are summed in a predetermined fashion in the processing unit $13^1, 13^2$ of the hidden layer. The output signals $V_0{}^1, V_1{}^1$ obtained from the processing units $13^1, 13^2$ of the hidden layer 13 are multiplied by the second weights $w_{ij}{}^2$, and the obtained products are suitably summed in the processing units $14^1$, $14^2$, $14^3$ of the output layer 14 in order to create the desired output signals y; $y_0$, $y_1$, $y_2$. Thereafter the output signals y are rescaled back to load or weight data (denormalization), which represents for instance loads directed to predetermined points A; A1, A2, A3,... in the structure 1.

The operation of the neural network can be illustrated by observing the neuron of Figure 4. The input signal x, i.e. the input vector $\underline{x} = [x_0, x_1, x_2, x_3,..., x_{N-1}]^T$ is fed into the neural network, i.e. to each input or processing unit 12; $12^1$, $12^2$, $12^3$, $12^4$ of the input layer 12. The element of each input vector $\underline{x}$ is multiplied in the neuron by a weight $w_i$ corresponding to the input signal. In principle the input signal can be either an analogous or a digital (binary) signal. The obtained weighted input signals $x_i w_i$ are summed up, and the term is subtracted from the sum. The obtained sum expression is described, by means of a non-linear function, as the output signal y, i.e. as the output vector $\underline{y} = [y_1, y_2, y_3,...]$ if $y_i$ represents the load directed for example to one support point i = 1, 2, 3,...

In mathematical terms, the operation of the processing unit can be described in the following form:

$$(1) \qquad y = f\left(\sum_{i=0}^{N-1} x_i w_i - \theta\right)$$

The term can be replaced by the expression $x'_N w'_N$, where $x'_N = 1$. Thus the formula (1) is rendered in a simpler form:

$$(2) \qquad y = f\left(\sum_{i=0}^{N} x_i w_i\right)$$

The non-linear function f is called the activation function. Generally the non-linearity employed in a perceptron network is a so-called hard limiter non-linearity, which is defined as follows:

$$(3) \qquad f_h(s) = \begin{cases} 1, & \text{when } s \geq 0 \\ -1, & \text{when } s < 0 \end{cases}$$

The output error caused by the desired output signal of the neural network and the real output value can be minimized for instance by the Widrow-Hoff algorithm, which also is called the LMS (Least Mean Square) algorithm.

The output error of the neural network can also be minimized by applying the gradient method, where the penalty function is the sum of the squares of the errors (delta rule). In order to enable the use of the gradient method, the activation function must be continuously derivating. The most generally used continuous activation function is defined as follows:

$$(4) \qquad f_s(s) = \frac{1}{1 + e^{-(s + \partial_0)\partial_1}}$$

The function 4 is called the Sigmoid function.

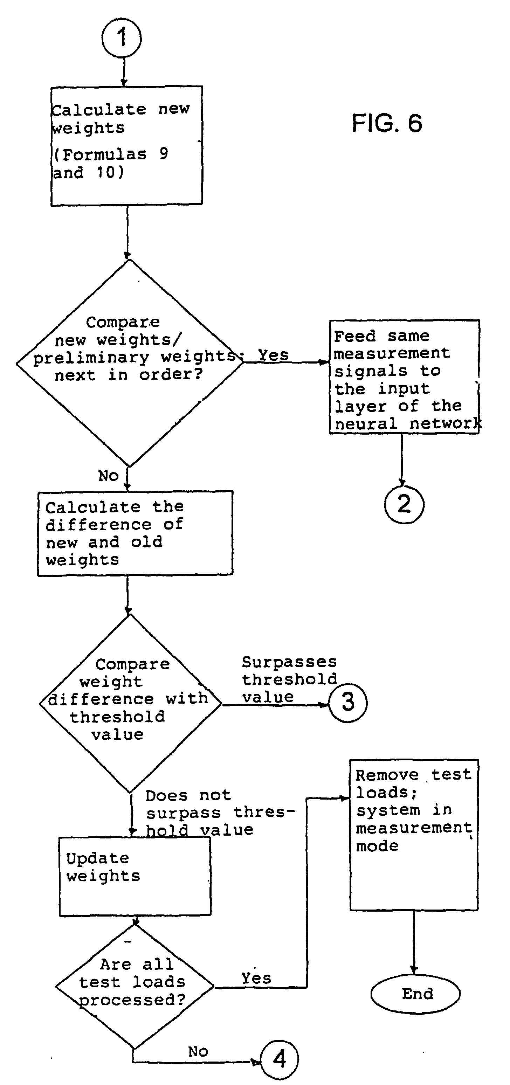

The neural network is trained with several test loads and test measurements to process the measurement signals of the said detectors. This is advantageously carried out as follows (cf. Figures 5 and 6). The weights $w_{jk}^1$ and $w_{ij}^2$ of the neural network are formatted with small random coefficients, which are normalized within the range [0, 1] i.e.:

$$(5) \qquad w_{jk}^1 = \text{rnd } [0, 1] \text{ weights of the 1st layer}$$

$$w_{ij}^2 = \text{rnd } [0, 1] \text{ weights of the 2nd layer (etc. through all layers of the}$$

neural network)

Several test measurements are carried out. At the support points A; A1, A2, A3,...of the structures, there are now arranged predetermined test loads K; K1, K2, K3 with known magnitudes. The measurement signals obtained from the measuring detectors 6 are processed in a corresponding preprocessing unit 7, and they are considered as input signals of the input points of the input level or layer 12 of the neural network , i.e. of the processing units $12^1$, $12^2$, $12^3$,... The input signal is $x_k$, and it is thus fed into the input layer (m=0; m = 0, 1, 2, 3,..., where m stands for the processing layer of the neural network in question), so that $V_k^0 = x_k$ with all values k, where k is the index variable of the input layer, k = 1, 2, 3, ... (i.e. k defines a single input signal from the group of all input signals) and = 1 (2, 3,...) means the time of measurement in question. Thereafter there are calculated the output signals $V_i^m$ for the output layer of the neural network:

$$ (6) \qquad V_i^m = f\!\left(h_i^m\right) = f\!\left(\sum_j w_{ij}^m V_j^{m-1}\right) $$

for all values of variables i and m
where f is a predetermined activation function (cf. formula 4), and i is the index variable i = 1, 2, 3,... of the output layer (i.e. i defines a single output signal from the group of all output signals).

The calculated output signal $V_i^m$ proper and the desired known output signal $_i$ are compared, and there is calculated their separation function $_i$, which describes the error or the real loading situation and the loading situation of the moment as calculated by the neural network:

$$ (7) \qquad \delta_i^M = f\!\left(h_i^M\right)\!\left[\zeta_i^\mu - V_i^M\right], $$

where $V_i^m$ is the real output signal

The desired output signals $_i$ are obtained from known test loads directed to the support points, such as from load K of the support point A in Figure 2.

There is further calculated the separation function $_i$ for the preceding layers of the neural network by resubstituting the errors

$$ (8) \qquad \delta_i^{m-1} = f\!\left(h_i^{m-1}\right)\sum_j w_{ji}^m \delta_j^m, $$

where m = M, M-1, M-2,..., 2, until the separation function $_i$ is calculated for every processing unit. The weighs are updated by calculating the new weight $w_{ij}$new on the basis of the old weight $w_{ij}$old and the weight error $w_{ij}$ as follows:

$$ (9) \qquad W_{ij}^{new} = W_{ij}^{old} + \Delta W_{ij}, $$

where

$$ (10) \qquad \Delta W_{ij}^m = \eta \delta_i^m V_j^{m-1} $$

When the new weights are selected, the new input signals, i.e. measurement signals can be selected by arranging for instance new test loads at the points of measurement. Thereafter the above described procedure is repeated, and new weights are defined again. When the difference of the new and old weights remains below the threshold value, i.e. within the predetermined limits, the weights needed in the measurements properly are defined and they are recorded, whereafter, when the test loads are removed, the neural network is properly tuned for the measurements.

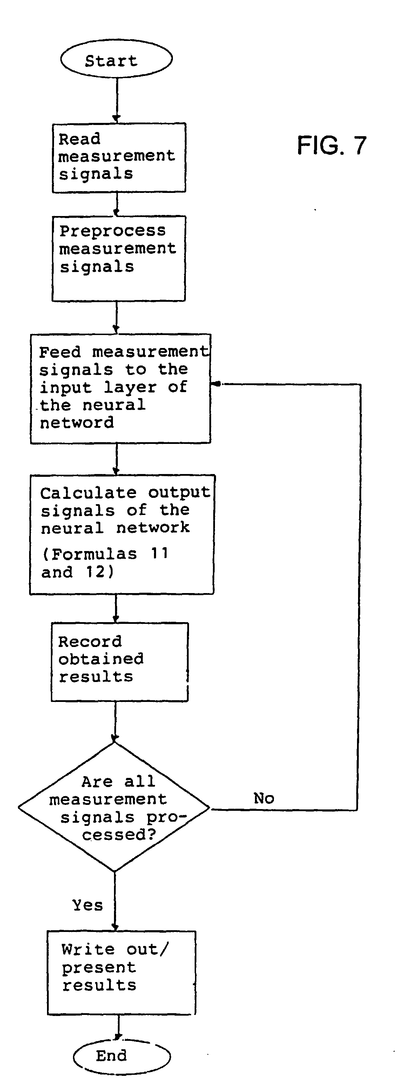

The points of support of the structure 1 are subjected to various static and dynamic loads, depending on the application in question. The neural network is used for observing changes in the load and locating fluctuations therein. Measuring signals are collected from the detectors 6 at suitable predetermined intervals, and the length of these intervals can be adjusted by means of the program when necessary. In the beginning of the measuring step, the filling up of the input layer of the neural network with measurement data is observed, and when the processing units of the input layer have received the measurement data and the input layer is thus filled, the calculation is started. The collecting of measurement data is advantageously interrupted for the duration of the calculation. The calculation is realized as follows (cf. Figure 7).

The measurement signals, i.e. the input signals $x_k$ are fed into the input layer of the neural network, whereafter the output signals of the network are calculated by using the formula

$$(11) \qquad V_i^m = f\left(h_i^m\right) = f\left(\sum_j w_{ij}^m V_j^{m-l}\right)$$

for every i and m

Thereafter there is written out the final outcome of the calculation, i.e. the output signals:

$$(12) \qquad y_i^\mu = V_i^M$$

for every value i,

which defines a single output signal from the group of all output signals.

Now the next measurement signals can be read into the input layer of the neural network, and the above described calculation procedure can be repeated. Thus the load F directed to one or several support points A is defined on the basis of the measurement signals obtained from the detectors 6 connected to the points of measurement and by utilizing the neural network and the predetermined weights.

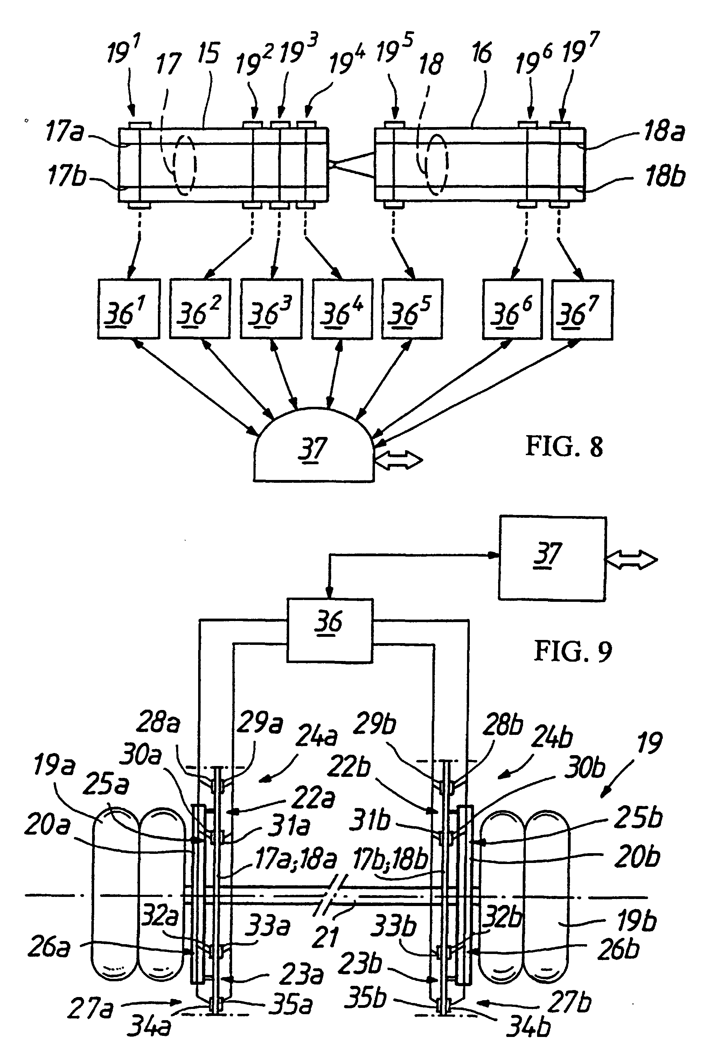

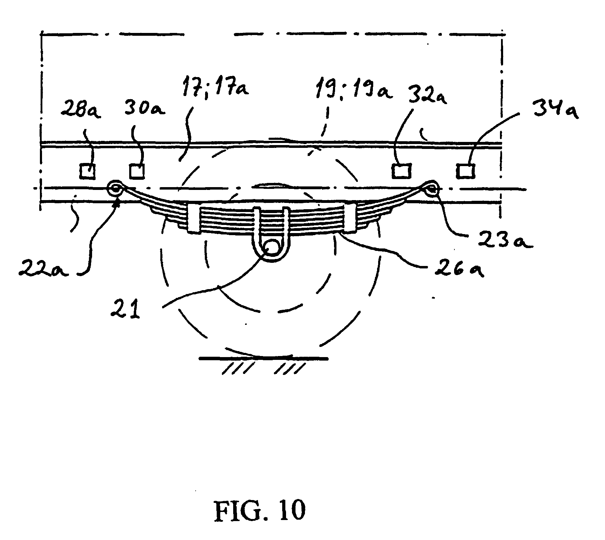

Figure 8 is a top-view schematic illustration of a vehicle combination , to which the measuring system of the invention is now applied, and of the measuring arrangement in block diagram form. The frames 17, 18 of the tractor 15 and trailer 16 of this combination comprise two parallel frame beams 17a, 17b; 18a, 18b, suitably spaced and interconnected with suitable transversal supports (not illustrated in the drawings). The tractor 15 and the trailer 16 are provided with a number of wheel bogie structures 19; $19^1$, $19^2$, $19^3$, $19^4$, $19^5$, $19^6$, $19^7$, of which in this case four pairs 19; $19^1$, $19^2$, $19^3$, $19^4$ are provided in the tractor and three pairs 19; $19^5$, $19^6$, $19^7$ in the trailer. The wheels 19a, 19b and the wheel bogie structure 19 is in this case attached, by means of leaf springs 20a, 20b, to the two frame beams 17a, 17b; 18a, 18b on both sides of the axis 21, at suitable support and fastening points 22a, 23a; 22b, 23b, as is illustrated in Figures 9 and 10. In the vicinity of the fastening points 22a, 23a; 22b, 23b of the wheel bogie 19, at the points of measurement 24a, 25a, 26a, 27a; 24b, 25b, 26b, 27b, there are arranged measuring detectors 28a, 29a, 30a, 31a, 32a, 33a, 34a, 35a; 28b, 29b, 30b, 31b, 32b, 33b, 34b, 35b. The weights of the loads resting on the tractor 15 and the trailer 16 are defined from the measurement signals obtained from the detectors on the basis of the deformations in the frame 17, 18. By means of the measuring detectors, there are defined the shearing strains directed especially to the frame at the respective points of measurement.

The locations of the points of measurement are defined on the basis of the known element method FEM (Finite Element Method). By means of the element method, there are defined the shearing strains directed to the frame beams 17a, 17b; 18a, 18b. The application of the element method to measuring vehicle loads, and particularly to locating points of measurement, is explained in more detail in the international patent application WO-A-9 423 275. Hence the element method can be used for defining the theoretical locations of the points of measurement in relation to the frame. It is pointed out that the detectors can be located at suitable points in the vicinity of the theoretically calculated points of measurement, when the measuring method of the present invention is applied.

The points of measurement are located in the vicinity of the support points especially because on the basis of the difference of the shearing strengths affective on different sides of the support points, it is possible to define the support reactions, i.e. weight loads directed to the support points. This is particularly emphasized when there are used continuous loads, in which case the shearing strength curves and their values vary in the lengthwise direction of the load bed, in this case of the frame beams 17a, 17b; 18a, 18b.

The measuring detectors are attached to the calculated points of measurement, as was stated above. Most advantageously the detectors are strain gauge detectors. At each point of measurement, there is attached at least one detector advantageously comprising two or more strain gauge detectors. At each point of measurement, there is thus formed a suitable detector element group, with detector elements on the same level but at an angle with respect to each other. A detector is also attached to the vertical side of the frame beam 17a, 17b; 18a, 18b, at least roughly on the location of the point of measurement. To one and the same point of measurement, there are advantageously attached two detectors on both sides of the frame beam. It is pointed out that the vehicle frame is always subjected to sideways directed strain, when the wheels are located at different heights, or when the vehicle is placed on inclined ground or when the load is arranged asymmetrically. Therefore several detectors are provided at each point of measurement, so that these secondary effects can be eliminated. Moreover, the electric coupling of the detectors can be realized so that the influence of temperature in the obtained measuring results is eliminated.

In the vehicle application of Figures 8 and 9, the strain gauge detectors, particularly the detector groups, are attached so that to the points of measurement 24a, 25a, 26a, 27a; 24b, 25b, 26b, 27b of the frame beams 17a; 18a and 17b; 18b, there respectively belong the detector groups 28a, 29a; 30a, 31a; 32a, 33a and 34a, 35a and 28b, 29b; 30b, 31b; 32b, 33b; 34b, 35b, which are thus located on the opposite sides of the vertical part of the frame beams. The detector groups are connected to the measurement signal preprocessing unit 36, where the signals are suitably processed for the neural network unit 37. The signal preprocessing unit 36 comprises for instance a Wheatstone bridge unit, whereto part of the detectors is coupled so that the influences of the deformations in the detectors are amplified in the output poles of the bridge. The difference signal affecting over the bridge is further coupled, via the amplifier provided in the preprocessing unit 36, via a suitable signal processing unit and multiplexer further to the neural network unit 37. In similar fashion, the preprocessing units 36; $36^1$, $36^2$, $36^3$, ... are used for processing the output signals from all detectors provided in connection with the wheel bogies 19, and these signals are fed into the neural network unit 37, as is illustrated in Figure 8. Most advantageously the neural network unit 37 is located in the cabin of the vehicle or the like, where it is connected to suitable display equipment, means for feeding instructions, possible printers and connections to external facilities, such as communication means in order to transport information for instance wirelessly to an external computer or other data collecting unit.

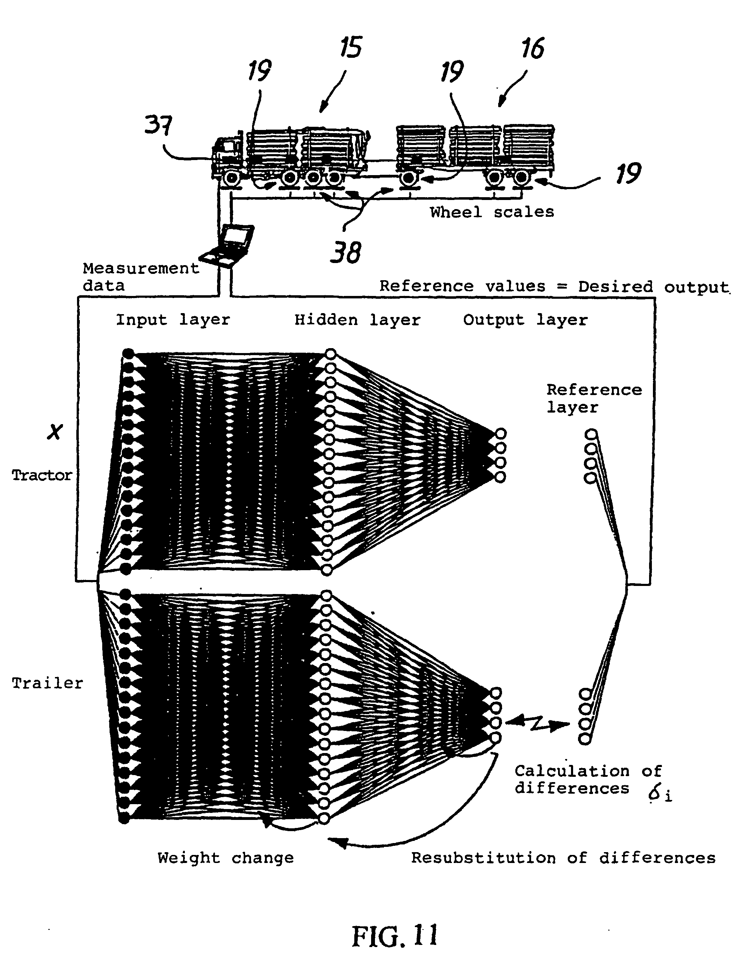

The measurement signals are processed in the neural network unit 37, by means of the neural network program recorded in the memory thereof. This processing is advantageously realized in similar fashion as was illustrated above, in connection with Figures 5 and 6. Figure 11 illustrates in principle the operation of a vehicle measurement system in block diagram form.

The wheel loads of a vehicle combination 15, 16 are calculated by means of the neural network unit 37. First the neural network is trained with test loads and test weighings, by using real wheel weights as feedback (cf. Figures 5 and 6.) The real wheel weights are measured by means of wheel scales 38 located under each wheel 19a (Figures 9, 10 and 11) of each bogie 19. The measurement data is collected from the detectors, from the points of measurement at each bogie 19. Now the employed input signals of the neural network, i.e. the input vector $\underline{x}$ are the measurement signals obtained from the detectors, from around each point of support 22a, 23a; 22b, 23b , which signals are preprocessed in the respective preprocessing units 36 and then averaged. By means of the neural network, the infed measurement data is processed according to the weight accumulations, so that the obtained output signal is the vector $y = [y_1, y_2, ..., y_w]^T$, where $y_i$ is the value of the load strain directed to one wheel. The internal operation of the neural network is described above, in connection with Figures 2 - 7 and formulas 1 - 10. This embodiment also introduces a three-layered neural network, including an input layer, a hidden layer and an output layer, as is illustrated in Figure 11. In addition to this, Figure 11 shows the reference layer, whereto the weight values obtained from the wheel scales 38 are thus fed, and with which the signals obtained from the detectors and processed by the neural network are compared, and whereby the suitable weights are finally calculated for the signals in between the layers of the neural network (cf. Figure 6).

There can be several measurement and calculation cycles, and in between them it is possible to adjust the load of the tractor and the trailer in a desired fashion and to repeat the calculations in order to check the weights of the neural network. Thereafter, when the neural network is trained by means of test loads and the weights are thus determined, it is ready to be used in real time for observing the loads in the tractor and the trailer, according to the procedure explained above (cf. Figure 7 and formulas 10 and 11).

In the above specification, the invention is explained with reference to a few preferred embodiments only. It is, however, pointed out that the invention can be modified in many ways within the scope of the inventional idea restricted by the appended patent claims.

Symbols:

$x_i$      Input

$w_{ij}^m$      Weight (from neuron $i$, to neuron $j$, layer $m$)

$\theta^m$      Bias-term (layer $m$)

$V_i^m$     Output (node $i$, layer $m$)

$h_i^m$     Neuron sum (node $i$, layer $m$)

$\zeta_i^\mu$     Train data (output node $i$, pattern $\mu$)

$\delta_i^m$     Difference (node $i$, layer $m$)

**Claims**

1. A method for measuring loads and/or load distributions of structures having bearing structures such as frame parts (2, 3; 17a, 17b; 18a, 18b), wherein detectors (6), advantageously strain gauge detectors, measuring the deformations of the structures are attached to the bearing structures, particularly to the frame parts (2, 3; 17a, 17b; 18a, 18b), in the vicinity of support points (A; A1, A2, A3,...; 22a, 23a; 22b, 23b), **characterized in that** the measurement signals ($x$; $x_0$, $x_1$, $x_2$, $x_3$,...) obtained from the measuring detectors are processed by means of a predetermined neural network, so that they are fed to the neural network through the input layer thereof, and from the output layer of the neural network, there are obtained the loads directed to the desired points of the structure, particularly to one or several support points (such as A, A1, A2, A3,...; 22a, 23a; 22b, 23b), and that the neural network is in advance trained with test loads to process the measurement signals of the said detectors.

2. A method according to claim 1, **characterized in that**

    a) at the support points (A; A1, A2, A3,...) of the structures (1), there are arranged predetermined loads (K; K1, K2, K3,...) of known magnitudes;
    b) the measurement signal (s) obtained from the measuring detectors (6) are preprocessed and considered as input signals ($x$; $x_0$, $x_1$, $x_2$, $x_3$,...) from the input units ($12^1$, $12^2$, $12^3$,...) of the input layer (12) of a predetermined neural network;
    c) all measurement signals are processed in the neural network by using preliminary weights ($w_{jk}^1$, $w_{ij}^2$) in between units of the different layers (12, 13; 13, 14) of the neural network, so that the computational load values directed to the said support points (A) of the structures are defined as the output signals ($y$; $y_1$, $y_2$, $y_3$,...) of the output units of the output layer (14);
    d) the values of known loads directed to the support points (A) of the structures are compared with the computational load values, and on the basis of the difference of these values, there are defined new weights which replace the preliminary weights;
    e) all measurement signals are reprocessed in the neural network by using the new weights in between the different units of the layers of the neural network, so that the computational load values directed to the said support points of the structures are defined as output signals of the output units of the output layer of the neural network;
    f) the values of known loads directed to the support points of the structures are compared with the new computational load values, and if the difference surpasses the preset limits, on the basis of the differences of these values there are again defined new weights, and the above described calculation procedure is repeated, and if the difference now remains within the allowed limits, the weights are retained;
    g) the predetermined loads (K) arranged at the support points of the structures are removed; and
    h) on the basis of the measurement signals obtained from the detectors (6) connected to the support points (A), the load (F) directed to one or several support points (A) is defined by utilizing the neural network and the predetermined weights.

3. A method according to claim 1 or 2 for for measuring weight and/or weight distributions of a vehicle, **characterized in that** the measurement signals ($x$; $x_0$, $x_1$, $x_2$, $x_3$,...) obtained from the measuring detectors are processed by means of a predetermined neural network, so that they are fed to the neural network through the input layer thereof, and from the output layer of the neural network, there are obtained the weight loads directed to the desired points of the vehicle, particularly to one or several support points (22a, 23a; 22b, 23b), and that the neural network is in advance trained with test loads to process the measurement signals of the said detectors.

4. A method according to claim 3, **characterized in that**

    - on each wheel (19a) and/or wheel bogie (19) of a vehicle (15, 11) there is set a predetermined load, which is measured;

- the measurement signal obtained from each detector (28a, 29a, 30a, 31a; 32a, 33a, 34a, 35a; 28b, 29b, 30b, 31b; 32b, 33b, 34b, 35b) is fed into the neural network unit (37), where the measurement signal of each detector or detector group is considered as the input signal (x; $x_0$, $x_1$, $x_2$, $x_3$,...) of the input unit of the input layer of the neural network, and the said signals are processed in the neural network so that the weights of the network are defined by means of the measured wheel weights and total weight; whereafter
- the weight distributions, bogie weights, wheel weights and/or total weight can be defined in real time by utilizing the measuring signals and the said neural network.

5. A method according to claim 3 or 4, **characterized in that** the employed neural network is a multilayered network, such as a three-layered perceptron network, comprising an input layer, at least one hidden layer and an output layer, in which network the measurement signals fed into the input units of the input layer are multiplied by the first weights, and the products are summed up according to a predetermined procedure in the units of the hidden layer, whereafter there is calculated the value of a suitable function, such as the Sigmoid function, with the said sum, and the signals obtained from the units of the hidden layer are multiplied by other weights, and the obtained products are suitably summed up in the output layer in order to create the output signal of the desired output unit.

6. A method according to claim 5, **characterized in that** the signal obtained from each point of measurement, from one or several detectors, is preprocessed, such as amplified and stabilized, and it is interpreted as the input signal of one unit of the input layer of the neural network.

7. A method according to claim 5 or 6, **characterized in that** the filling of the input layer with measuring data is observed, and when the input layer is filled, the calculation is started.

8. A method according to any of the preceding claims 3-7, **characterized in that** the measurement signals are selected in the vicinity of the support points of the wheels of the vehicle, and that strain gauge detectors are installed in the frame structure of the vehicle on the said spots.


**Patentansprüche**

1. Verfahren zur Messung von Lasten und/oder Lastverteilungen von Tragwerken, die Lagerstrukturen, wie Rahmenteile (2, 3; 17a, 17b; 18a, 18b), aufweisen, wobei Detektoren (6), insbesondere Dehnungsmessungsdetektoren, welche die Verformungen der Tragwerke messen, an den Lagerstrukturen, insbesondere an den Rahmenteilen (2, 3; 17a, 17b; 18a, 18b) in der Nähe von Stützpunkten (A; A1, A2, A3, ...; 22a, 23a; 22b, 23b) angebracht sind, **dadurch gekennzeichnet,**
**dass** die Messsignale (x; $x_0$, $x_1$, $x_2$, $x_3$, ...), die man von den Messungsdetektoren erhält, mittels eines vorbestimmten neuralen Netzwerks derart verarbeitet werden, dass sie dem neuralen Netzwerk durch die Eingangsebene zugeführt werden und von der Ausgangsebene des neuralen Netzwerks die auf die gewünschten Punkte der Struktur gerichteten Lasten erhalten werden, insbesondere auf einen oder mehrere Stützpunkte (wie A, A1, A2, A3, ...; 22a, 23a; 22b, 23b), und dass das neurale Netzwerk im Voraus mit Testlasten eingelernt wird, um die Messsignale der Detektoren zu verarbeiten.

2. Verfahren nach Anspruch 1,
**dadurch gekennzeichnet, dass**

a) an den Stützpunkten (A; A1, A2, A3, ...) des Tragwerks (1) vorbestimmte Lasten (K; K1, K2, K3, ...) bekannter Größe angeordnet werden;
b) das/die Messsignal/e, welche man von den Messdetektoren (6) erhält, vorverarbeitet werden und als Eingangssignale (x; $x_0$, $x_1$, $x_2$, $x_3$, ...) von den Eingangseinheiten ($12^1$, $12^2$, $12^3$, ...) der Eingangsebene (12) eines vorherbestimmten neuralen Netzwerks angesehen werden;
c) alle Messsignale im neuralen Netzwerk durch den Einsatz von vorläufigen Gewichten ($w_{jk}^1$, $w_{ij}^2$) zwischen den Einheiten der unterschiedlichen Ebenen (12, 13; 13, 14) des neuralen Netzwerks verarbeitet werden, so dass die berechneten Lastwerte, die auf die Stützpunkte (A) der Strukturen gerichtet sind, als die Ausgangssignale (y; $y_1$, $y_2$, $y_3$, ...) der Ausgangseinheiten der Ausgangsebene (14) definiert werden;
d) die Werte der bekannten Lasten, welche auf die Stützpunkte (A) der Strukturen gerichtet sind, mit den berechneten Lastwerten verglichen werden, und auf der Basis der Differenz zwischen diesen Werten neue Gewichte definiert werden, welche die vorläufigen Gewichte ersetzen;

e) alle Messsignale im neuralen Netzwerk durch Benutzen der neuen Gewichte zwischen den unterschiedlichen Einheiten der Ebenen des neuralen Netzwerks neu bearbeitet werden, so dass die berechneten Lastwerte, welche auf die Stützpunkte der Tragwerke gerichtet sind, als Ausgangssignale der Ausgangseinheiten der Ausgangsebene des neuralen Netzwerks definiert werden;

f) die Werte der bekannten Lasten, welche auf die Stützpunkte der Strukturen gerichtet sind, mit den neuen berechneten Lastwerten verglichen werden und, wenn die Differenz die vorausbestimmten Grenzen überschreitet, auf der Basis der Abweichungen dieser Werte wieder neue Gewichte definiert werden, und die oben beschriebene Berechnungsprozedur wiederholt wird, und, wenn die Differenz dann innerhalb der erlaubten Grenzen bleibt, die Gewichte beibehalten werden;

g) die vorherbestimmten Lasten (K), welche an den Stützpunkten der Strukturen angeordnet sind, entfernt werden; und

h) auf der Basis der Messsignale, welche man von den Detektoren (6) erhält, die an den Stützpunkten (A) angeschlossen sind, die Last (F), welche auf einen oder mehrere Stützpunkte (A) gerichtet sind, durch den Einsatz des neuralen Netzwerks und der vorbestimmten Gewichte definiert wird.

3. Verfahren nach Anspruch 1 oder 2 zum Messen von Gewichten und/oder Gewichtsverteilungen eines Fahrzeugs, **dadurch gekennzeichnet,** **dass** die Messsignale ($x$; $x_0$, $x_1$, $x_2$, $x_3$, ...), welche man von den Messdetektoren erhält, mittels eines vorherbestimmten neuralen Netzwerks verarbeitet werden, so dass sie dem neuralen Netzwerk durch dessen Eingangsebene zugeführt werden, und von der Ausgangsebene des neuralen Netzwerks die Gewichtslasten erhalten werden, welche auf die gewünschten Punkte des Fahrzeugs gerichtet sind, insbesondere auf einen oder mehrere Stützpunkte (22a, 23a; 22b, 23b), und dass das neurale Netzwerk im Voraus mit Testlasten zum Verarbeiten der Messsignale der Detektoren eingelernt wird.

4. Verfahren nach Anspruch 3, **dadurch gekennzeichnet,** **dass** an jedem Rad (19a) und/oder Laufrad (19) eines Fahrzeugs (15, 11) eine vorherbestimmte Last angebracht wird, welche gemessen wird; das Messsignal, welches man von jedem Detektor (28a, 29a, 30a, 31a; 32a, 33a, 34a, 35a; 28b, 29b, 30b, 31b; 32b; 33b, 34b, 35b) erhält, der Einheit (37) des neuralen Netzwerks zugeführt wird, wobei die Messsignale jedes Detektors oder jeder Detektorgruppe als die Eingangssignale ($x$; $x_0$, $x_1$, $x_2$, $x_3$, ...) der Eingangseinheit der Eingangsebene des neuralen Netzwerks angesehen werden, und die Signale im neuralen Netzwerk so verarbeitet werden, dass die Gewichte im Netzwerk durch die gemessenen Radlasten und das Gesamtgewicht definiert werden, wonach die Gewichtsverteilungen, Laufradlasten, Radlasten und/oder das Gesamtgewicht durch den Einsatz der Messsignale und des neuralen Netzwerks in Echtzeit definiert werden können.

5. Verfahren nach Anspruch 3 oder 4, **dadurch gekennzeichnet,** **dass** das eingesetzte neurale Netzwerk ein mehrere Ebenen umfassendes Netzwerk, wie etwa ein drei Ebenen umfassendes Perceptron-Netzwerk ist, welches eine Eingangsebene, mindestens eine versteckte Ebene und eine Ausgangsebene beinhaltet, wobei in dem Netzwerk die Messsignale, die den Eingangseinheiten der Eingangsebene zugeführt werden, mit den ersten Gewichten multipliziert werden und die Produkte nach einer vorherbestimmten Prozedur in den Einheiten der versteckten Ebene aufsummiert werden, wonach dort der Wert einer passenden Funktion, wie der Sigmoid-Funktion, mit der Summe berechnet wird, und die Signale, die man von den Einheiten der versteckten Ebene erhält, mit anderen Gewichten multipliziert werden, und die erhaltenen Produkte in der Ausgangsebene geeignet aufaddiert werden, um das Ausgangssignal der gewünschten Ausgangseinheit zu erzeugen.

6. Verfahren nach Anspruch 5, **dadurch gekennzeichnet,** **dass** das Signal, welches man von jedem Messpunkt erhält, von einem oder mehreren Detektoren vorverarbeitet, wie z.B. verstärkt und stabilisiert, wird, und es als das Eingangssignal einer Einheit der Eingangsebene des neuralen Netzwerks aufgefasst wird.

7. Verfahren nach Anspruch 5 oder 6, **dadurch gekennzeichnet,** **dass** das Ausfüllen der Eingangsebene mit Messwerten überwacht wird, und, wenn die Eingangsebene gefüllt ist, die Berechnung gestartet wird.

8. Verfahren nach einem der vorangehenden Ansprüche 3 bis 7,
   **dadurch gekennzeichnet,**
   **dass** die Messsignale in der Nähe der Stützpunkte der Fahrzeugräder ausgewählt werden, und dass Dehnungsmessungsdetektoren in der Rahmenstruktur des Fahrzeugs an den Stellen installiert werden.


**Revendications**

1. Procédé de mesure de charges et/ou de répartitions de charges imparties à des structures ayant des structures portantes telles des parties de châssis (2, 3 ; 17a, 17b ; 18a, 18b), dans lequel des capteurs (6), de préférence des capteurs à jauge de contrainte, mesurant les déformations des structures sont fixés aux structures portantes, en particulier aux parties de châssis (2, 3 ; 17a,17b ; 18a, 18b) situées à proximité de points d'appui (A ; A1, A2, A3,...; 22a, 23a ; 22b, 23b), **caractérisé en ce que** les signaux de mesure (x ; $x_0$, $x_1$, $x_2$, $x_3$,...) obtenus à partir des capteurs de mesure sont traités au moyen d'un réseau neuronal prédéterminé, de telle sorte qu'ils sont introduits dans le réseau neuronal par la couche d'entrée de celui-ci, et que par la couche de sortie du réseau neuronal, on obtient les charges appliquées aux points souhaités de la structure, en particulier à un ou plusieurs points d'appui (tels que A, A1, A2, A3,... ; 22a, 23a ; 22b, 23b), et **en ce que** le réseau neuronal a subi un apprentissage préliminaire avec des charges d'essai pour traiter les signaux de mesure desdits capteurs.

2. Procédé selon la revendication 1, **caractérisé en ce que** :

   a) aux points d'appui (A; A1, A2, A3,...) des structures (1) sont agencées des charges prédéterminées (K; K1, K2, K3,..,) de grandeur connue;
   b) le ou les signaux de mesure obtenus à partir des capteurs de mesure (6) sont prétraités et interprétés comme des signaux d'entrée (x ; $x_0$, $x_1$, $x_2$, $x_3$,...) venant des unités d'entrée ($12^1$, $12^2$, $12^3$,...) de la couche d'entrée (12) d'un réseau neuronal prédéterminé ;
   c) tous les signaux de mesure sont traités dans le réseau neuronal au moyen de pondérations préliminaires ($w_{jk}{}^1$, $w_{ij}{}^2$) entre des unités des couches différentes (12, 13 ; 13, 14) du réseau neuronal, de telle sorte que les valeurs de charge de calcul appliquées auxdits points d'appui (A) des structures sont interprétées comme les signaux de sortie (y ; $y_1$, $y_2$, $y_3$,...) des unités de sortie de la couche de sortie (14) ;
   d) les valeurs de charges connues appliquées aux points d'appui (A) des structures sont comparées aux valeurs de charge de calcul et sur base de la différence de ces valeurs, on définit de nouvelles pondérations qui remplacent les pondérations préliminaires ;
   e) tous les signaux de mesure sont retraités dans le réseau neuronal au moyen des nouvelles pondérations entre les différentes unités des couches du réseau neuronal, de telle sorte que les valeurs de charge de calcul appliquées auxdits points d'appui des structures sont interprétées comme des signaux de sortie des unités de sortie de la couche de sortie du réseau neuronal;
   f) les valeurs de charges connues appliquées aux points d'appui des structures sont comparées aux nouvelles valeurs de charge de calcul et si la différence dépasse les limites prédéfinies, sur base des différences de ces valeurs, on définit à nouveau de nouvelles pondérations et la procédure de calcul décrite ci-dessus est répétée, tandis que si la différence reste cette fois à l'intérieur des limites autorisées, les pondérations sont retenues ;
   g) les charges prédéterminées (K) agencées aux points d'appui des structures sont retirées ; et
   h) sur base des signaux de mesure obtenus à partir des capteurs (6) reliés aux points d'appui (A), la charge (F) appliquée à un ou plusieurs points d'appui (A) est déterminée en utilisant le réseau neuronal et les pondérations prédéterminées.

3. Procédé selon la revendication 1 ou 2 pour mesurer un poids et/ou des répartitions de poids d'un véhicule, **caractérisé en ce que** les signaux de mesure (x ; $x_0$, $x_1$, $x_2$, $x_9$,...) obtenus à partir des capteurs de mesure sont traités au moyen d'un réseau neuronal prédéterminé, de telle sorte qu'ils sont introduits dans le réseau neuronal par la couche d'entrée de celui-ci, et que par la couche de sortie du réseau neuronal, on obtient les charges en poids appliquées aux points souhaités du véhicule, en particulier à un ou plusieurs points d'appui (22a, 23a; 22b, 23b), et **en ce que** le réseau neuronal a subi un apprentissage préliminaire avec des charges d'essai pour traiter les signaux de mesure desdits capteurs.

4. Procédé selon la revendication 3, **caractérisé en ce que** :

- sur chaque roue (19a) et/ou chaque train de roues (19) d'un véhicule (15,11) se trouve installée une charge prédéterminée qui est mesurée ;
- le signal de mesure obtenu à partir de chaque capteur (28a, 29a, 30a, 31a ; 32a, 33a, 34a, 35a ; 28b, 29b, 30b, 31b ; 32b, 33b, 34b, 35b) est introduit dans l'unité à réseau neuronal (37), où le signal de mesure de chaque capteur ou groupe de capteurs est interprété comme le signal d'entrée (x ; $x_0$, $x_1$, $x_2$, $x_3$,...) de l'unité d'entrée de la couche d'entrée du réseau neuronal, et lesdits signaux sont traités dans le réseau neuronal de telle sorte que les pondérations du réseau sont définies à partir des poids de roues mesurés et du poids total ; après quoi
- les répartitions de poids, les poids des trains, les poids des roues et/ou le poids total peuvent être définis en temps réel en utilisant les signaux de mesure et ledit réseau neuronal.

5. Procédé selon la revendication 3 ou 4, **caractérisé en ce que** le réseau neuronal employé est un réseau à couches multiples, tel un réseau perceptron à trois couches, comprenant une couche d'entrée, au moins une couche cachée et une couche de sortie, réseau dans lequel les signaux de mesure introduits dans les unités d'entrée de la couche d'entrée sont multipliés par les premières pondérations, et les produits sont additionnés suivant une procédure prédéterminée dans les unités de la couche cachée, après quoi le système calcule la valeur d'une fonction appropriée, telle la fonction sigmoïde, avec ladite somme, et les signaux obtenus à partir des unités de la couche cachée sont multipliés par d'autres pondérations, et les produits obtenus sont additionnés de manière appropriée dans la couche de sortie afin de créer le signal de sortie de l'unité de sortie souhaitée.

6. Procédé selon la revendication 5, **caractérisé en ce que** le signal obtenu à partir de chaque point de mesure, par un ou plusieurs capteurs, est prétraité, par exemple amplifié et stabilisé, et il est interprété comme le signal d'entrée d'une unité de la couche d'entrée du réseau neuronal.

7. Procédé selon la revendication 5 ou 6, **caractérisé en ce que** le remplissage de la couche d'entrée avec les données de mesures est surveillé et quand la couche d'entrée est remplie, la procédure de calcul est lancée.

8. Procédé selon l'une quelconque des revendications 3 à 7, **caractérisé en ce que** les signaux de mesure sont sélectionnés à proximité des points d'appui des roues du véhicule, et **en ce que** des capteurs à jauge de contrainte sont installés dans la structure de châssis du véhicule auxdits emplacements.

Fig.1

Fig.2

Fig.3

$$\sum_{i=0}^{N-1} x_i w_i - \theta$$

Fig.4

FIG. 5

```
                    ( Start )
                        |
                        v
              +------------------+
              | Format           |
              | weights          |
              +------------------+
                        |
                        v
   (4) ------------> +------------------+
                     | Set test         |
                     | load             |
                     +------------------+
                        |
                        v
              +------------------+
              | Read             |
              | measurement      |
              | signals          |
              +------------------+
                        |
              +------------------+
              | Preprocess       |
              | measurement      |
              | signals          |
              +------------------+
                        |
                        v
   (3) ------------> +------------------+
                     | Feed measure-    |
                     | ment signals to  |
                     | the input layer  |
                     | of the neural    |
                     | network          |
                     +------------------+
                        |
                        v
   (2) ------------> +------------------+
                     | Calculate the    |
                     | output signals of|
                     | the output layer |
                     | of the neural    |
                     | network          |
                     |                  |
                     | (Formula 6)      |
                     +------------------+
                        |
                        v
              +------------------+
              | Calculate the    |
              | separation       |
              | function of the  |
              | output signal    |
              |                  |
              | (Formula 7)      |
              +------------------+
                        |
                        v
              +------------------+
              | Calculate        |
              | separation       |
              | functions for    |
              | the hidden       |
              | layers of the    |
              | neural network   |
              |                  |
              | (Formula 8)      |
              +------------------+
                        |
                        v
                      ( 1 )
```

FIG. 6

```
        ( 1 )
          │
          ▼
┌──────────────────┐
│ Calculate new    │
│ weights          │
│ (Formulas 9      │
│ and 10)          │
└──────────────────┘
          │
          ▼
      ◇ Compare
      new weights/
      preliminary weights    Yes    ┌──────────────────┐
      next in order? ─────────────▶ │ Feed same        │
          │                         │ measurement      │
          │                         │ signals to       │
         No                         │ the input        │
          ▼                         │ layer of the     │
┌──────────────────┐                │ neural network   │
│ Calculate the    │                └──────────────────┘
│ difference of    │                         │
│ new and old      │                         ▼
│ weights          │                       ( 2 )
└──────────────────┘
          │
          ▼
      ◇ Compare          Surpasses
      weight             threshold
      difference with    value      ( 3 )
      threshold   ──────────────▶
      value
          │
          │                    ┌──────────────────┐
    Does not                   │ Remove test      │
    surpass thres-             │ loads;           │
    hold value                 │ system in        │
          ▼                    │ measurement      │
┌──────────────────┐           │ mode             │
│ Update           │           └──────────────────┘
│ weights          │                    │
└──────────────────┘                    ▼
          │                          ( End )
          ▼
      ◇ Are all        Yes
      test loads ──────────┘
      processed?
          │
         No    ( 4 )
```

```
                    ┌─────────┐
                   (  Start   )
                    └────┬────┘
                         │
                         ▼
               ┌──────────────────┐          FIG. 7
               │ Read             │
               │ measurement      │
               │ signals          │
               └────────┬─────────┘
                         │
                         ▼
               ┌──────────────────┐
               │ Preprocess       │
               │ measurement      │
               │ signals          │
               └────────┬─────────┘
                         │
                         ▼
               ┌──────────────────┐
               │ Feed measurement │◄──────────────┐
               │ signals to the   │               │
               │ input layer of   │               │
               │ the neural       │               │
               │ netword          │               │
               └────────┬─────────┘               │
                         │                         │
                         ▼                         │
               ┌──────────────────┐                │
               │ Calculate output │                │
               │ signals of the   │                │
               │ neural network   │                │
               │                  │                │
               │ (Formulas 11     │                │
               │ and 12)          │                │
               └────────┬─────────┘                │
                         │                          │
                         ▼                          │
               ┌──────────────────┐                 │
               │ Record           │                 │
               │ obtained         │                 │
               │ results          │                 │
               └────────┬─────────┘                 │
                         │                           │
                         ▼                           │
                      ◇───────◇                      │
                    ◇  Are all  ◇                    │
                   ◇ measurement ◇      No           │
                   ◇ signals pro-◇──────────────────┘
                    ◇  cessed?   ◇
                      ◇───────◇
                         │
                        Yes
                         │
                         ▼
               ┌──────────────────┐
               │ Write out/       │
               │ present          │
               │ results          │
               └────────┬─────────┘
                         │
                         ▼
                    ┌─────────┐
                   (   End    )
                    └─────────┘
```

FIG. 8

FIG. 9

FIG. 10

FIG. 11